# DEMANDE DE BREVET EUROPEEN

(11) **EP 4 456 362 A1**
(43) Date de publication de la demande: **30.10.2024**
(21) Numéro de dépôt: 24164581.1
(22) Date de dépôt: 19.03.2024
(51) Int. Cl.: H02H 7/18, H02H 9/04, H02H 3/087

(54) **CIRCUIT DE PROTECTION CONTRE LES SURTENSIONS**

(30) Priorité: 31.03.2023 FR 2303191
(71) Demandeur: STMicroelectronics International N.V., 1228 Plan-les-Ouates, Geneva (CH)
(72) Inventeur: SIMONNET, Jean-Michel, 37270 VERETZ (FR); PICHON, Romain, 37380 REUGNY (FR)
(74) Mandataire: Cabinet Beaumont

(57) **Abrégé**

La présente description concerne un circuit (100) de protection contre les surtensions apparaissant lors d'une protection contre les surintensités comprenant :
- une première diode (D101) et une deuxième diode (D102) dont les cathodes sont reliées à un premier noeud (VDD101) ;
- une première diode de suppression de tensions transitoires (TVS101) dont la cathode est reliée à un deuxième noeud (GND101) et dont l'anode est reliée à l'anode de ladite première diode (D101) ;
- un thyristor (T101) dont la cathode est reliée à l'anode de ladite deuxième diode (D102), dont l'anode est reliée audit deuxième noeud, et dont la gâchette est reliée à l'anode de la dite première diode (D101) ; et
- un interrupteur (M101) dont une première borne est reliée au premier noeud (VDD101).

## Description

### Domaine technique

La présente description concerne de façon générale le domaine de l'électronique de puissance, et plus particulièrement concerne les dispositifs et circuits électroniques adaptés à la protection contre les surtensions lors de la protection contre les surintensités.

### Technique antérieure

Il est essentiel, de nos jours, d'équiper les systèmes et dispositifs électroniques de circuits de protection contre les surintensités et contre les surtensions. En effet, l'apparition d'une surintensité ou d'une surtension peut endommager sévèrement un système ou dispositif non protégé.

Il serait souhaitable de pouvoir améliorer, au moins en parties, certains aspects des circuits de protection contre les surtensions.

### Résumé de l'invention

Il existe un besoin pour des circuits de protection contre les surintensités et contre les surtensions plus performant.

Il existe un besoin pour des circuits de protection contre les surintensités et contre les surtensions bidirectionnels.

Un mode de réalisation pallie tout ou partie des inconvénients des circuits connus de protection contre les surtensions et les surintensités.

Un mode de réalisation prévoit un circuit de protection contre les surtensions apparaissant lors d'une protection contre les surintensités comprenant :
- une première diode et une deuxième diode dont les cathodes sont reliées à un premier noeud ;
- une première diode de suppression de tensions transitoires dont la cathode est reliée à un deuxième noeud et dont l'anode est reliée à l'anode de ladite première diode ;
- un thyristor dont la cathode est reliée à l'anode de ladite deuxième diode, dont l'anode est reliée audit deuxième noeud, et dont la gâchette est reliée à l'anode de la dite première diode ; et
- un interrupteur dont une première borne est reliée au premier noeud.

Selon un mode de réalisation, la première diode est une diode à jonction PN.

Selon un mode de réalisation, la deuxième diode est une diode de Schottky.

Selon un mode de réalisation, la deuxième diode est une diode à jonction PN.

Selon un mode de réalisation, les première et deuxième diodes ont des tensions de polarisation inverse supérieures à une tension d'alimentation maximale.

Selon un mode de réalisation, la tension d'alimentation maximale est supérieure à 14 V.

Selon un mode de réalisation, la tension d'alimentation est adaptée à être appliquée entre une deuxième borne de l'interrupteur, différente de la première borne, et ledit deuxième noeud.

Selon un mode de réalisation, ladite première diode à suppression de tensions transitoires a une tension d'avalanche supérieure à une tension délivrée par une charge.

Selon un mode de réalisation, le circuit comprend, en outre, au moins une deuxième diode de suppression de tensions transitoires disposée en série entre la cathode de ladite première diode à suppression de tensions transitoires et ledit deuxième noeud.

Selon un mode de réalisation, l'interrupteur est un ou plusieurs transistors de type NMOS.

Selon un mode de réalisation, l'interrupteur est un ou plusieurs transistor de type PMOS.

Selon un mode de réalisation, une charge est adaptée à être connectée entre les premier et deuxième noeuds.

Selon un mode de réalisation, ladite charge est une batterie.

Selon un mode de réalisation, le circuit comprend, en outre :
- une troisième diode à suppression de tensions transitoires dont la cathode est reliée au premier noeud ; et
- une troisième diode dont l'anode est reliée à l'anode de ladite troisième diode à suppression de tensions transitoires, et dont la cathode est reliée au deuxième noeud.

Un autre mode de réalisation prévoit un dispositif de conversion de tension comprenant le circuit décrit précédemment.

Un autre mode de réalisation prévoit un véhicule comprenant un circuit décrit précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un premier mode de réalisation d'un circuit de protection contre les surintensités et les surtensions ;
la figure 2 représente un graphique illustrant le fonctionnement du mode de réalisation de la figure 1 ; et
la figure 3 représente un premier mode de réalisation d'un circuit de protection contre les surintensités et contre les surtensions.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

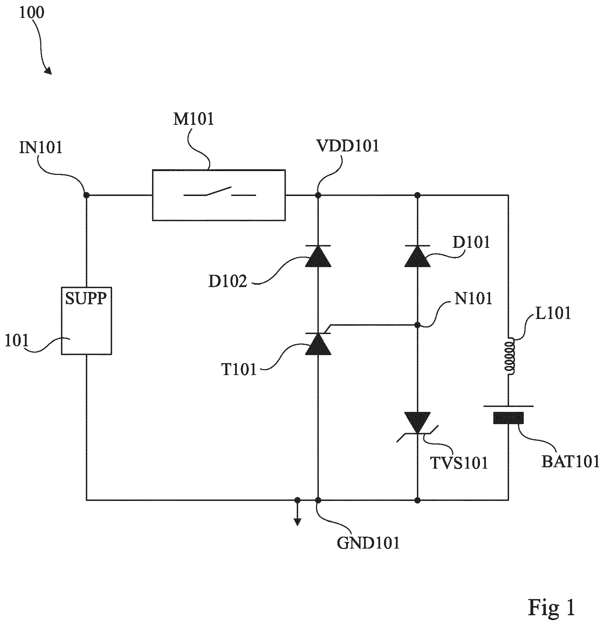

La figure 1 représente un mode de réalisation d'un circuit 100 de protection contre les surintensités et contre les surtensions. Plus particulièrement, le circuit 100 est un circuit de protection contre les surtensions apparaissant lors d'une protection contre les surintensités.

Le circuit 100 est adapté à être placé entre une alimentation 101 (SUPP) et une charge. L'alimentation 101 fournit une tension d'alimentation entre un noeud IN101 et un noeud GND101, et un courant d'alimentation sur le noeud IN101. Selon un exemple, le noeud GND101 est un noeud de référence, c'est-à-dire un noeud recevant un potentiel de référence, comme la masse.

En figure 1, la charge est une batterie BAT101, et une inductance parasite L101 est représentée en série avec la batterie BAT101. Selon un exemple, l'inductance parasite L101 représente l'inductance parasite de fils conducteurs reliant la batterie BAT101 à d'autres dispositifs ou composants électroniques. Ainsi, l'inductance L101 et la batterie BAT101 sont montés en série entre un noeud VDD101 et le noeud de référence GND101.

Selon un exemple, la batterie BAT101 est une batterie rechargeable, comme une batterie d'un véhicule automobile. Selon un exemple préféré, la batterie BAT101 est une batterie auxiliaire d'un véhicule automobile. Selon un exemple, le circuit 100 peut être compris dans un dispositif de conversion de tension adapté à alimenter une batterie auxiliaire d'un véhicule automobile.

Selon un autre exemple, la charge peut faire partie d'un groupe motopropulseur, d'une plaque de chauffage par induction, d'un panneau photovoltaïque, etc. De manière plus générale, le circuit 100 peut faire partie de tout convertisseur d'une tension continue en une autre tension continue, et d'un chargeur utilisant une tension continue pouvant faire partie d'un dispositif électronique compris dans la liste des systèmes décrits précédemment.

Le circuit 100 comprend, un interrupteur M101 de protection contre les courts-circuits ou surintensités. Selon un exemple l'interrupteur M101 est un transistor, ou plusieurs transistors montés en parallèle. Selon un mode de réalisation, l'interrupteur M101 est un ou plusieurs transistors à effet de champ à grille isolée, ou transistors à effet de champ à structure métal-oxyde-semiconducteur, plus couramment appelés transistors MOSFET (Metal-Oxide-semiconductor Field-Effect Transistor) ou transistors MOS. Plus particulièrement, et selon un exemple, le transistor M101 est un ou plusieurs transistors de type MOS à canal N, aussi appelé transistor NMOS. Selon un autre exemple, le transistor M101 est un ou plusieurs transistors de type MOS à canal P, aussi appelé transistor PMOS.

Une première borne de conduction de l'interrupteur M101 est reliée, de préférence connectée, au noeud IN101, et une deuxième borne de conduction de l'interrupteur M101 est reliée, de préférence connectée, au noeud VDD101.

Le circuit comprend, en outre, entre le noeud VDD101 et le noeud GND101, une diode D101 et une diode de suppression de tensions transitoires TVS101.

La cathode de la diode D101 est reliée, de préférence connectée, au noeud VDD101, et l'anode de la diode D101 est reliée, de préférence connectée, à un noeud N101. Selon un exemple, la diode D101 est une diode classique à jonction PN, c'est-à-dire une diode formée dans un substrat semiconducteur. Selon un mode de réalisation, la diode D101 a une tension de polarisation inverse, couramment appelée tension VRRM, supérieure à une tension maximale d'alimentation Vmax. Selon un exemple la tension maximale d'alimentation Vmax est supérieure à 14 V, par exemple de l'ordre de 24 V. Selon une variante, la diode D101 peut être remplacée par plusieurs diode montées en série.

La diode de suppression de tensions transitoires TVS101 (TVS, Transient Voltage Suppressor), appelé ensuite diode TVS TVS101, ou diode Transil, est représenté en figure 1 par le même symbole électronique qu'une diode Zener. La diode TVS TVS101 est adaptée à supporter entre ses bornes une tension fournie par la charge, ici la batterie BAT101. Ainsi, la diode TVS TVS101 a une tension d'écrêtage supérieure ou égale à la tension de la batterie BAT101. Selon un mode de réalisation, la tension d'écrêtage de la diode TVS TVS101 est supérieure ou égale à 14 V. L'anode de la diode TVS TVS101 est reliée, de préférence connectée, au noeud N101, et la cathode de la diode TVS TVS101 est reliée, de préférence connectée, au noeud GND101.

Selon une variante de réalisation, la diode TVS TVS101 peut être composée de plusieurs diodes TVS disposées en série, dans le même sens, entre les noeuds N101 et GND101.

Le circuit comprend, en outre, entre le noeud VDD101 et le noeud GND 101, une diode D102 et un thyristor T101

La cathode de la diode D102 est reliée, de préférence connectée, au noeud VDD101. Selon un premier exemple, la diode D102 est une diode classique à jonction PN, c'est-à-dire une diode formée dans un substrat semiconducteur. Selon un deuxième exemple, la diode D102 est une diode de Schottky. Selon un mode de réalisation, la diode D102 a une tension de polarisation inverse supérieure à la tension d'alimentation maximale Vmax décrite précédemment.

Le thyristor T101 est un redresseur au silicium (SCR, Silicon Controlled Rectifier). La cathode du thyristor T101 est reliée, de préférence connectée, à l'anode de la diode D102, et l'anode du thyristor T101 est reliée, de préférence connectée, au noeud GND101. La gâchette du thyristor T101 est reliée, de préférence connectée, au noeud N101.

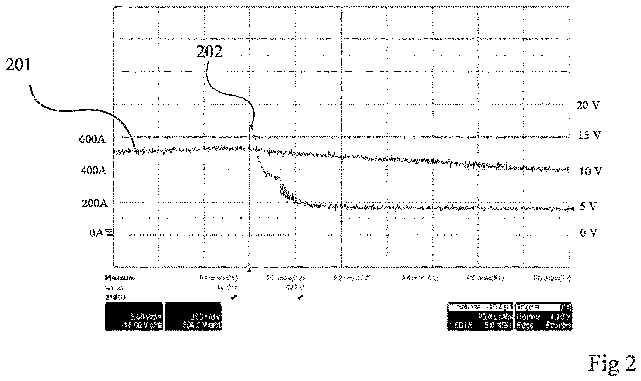

Le fonctionnement du circuit 100 est décrit en relation avec la figure 2.

La figure 2 est un graphique représentant deux courbes 201 et 202 illustrant le fonctionnement du circuit 100 décrit en relation avec la figure 1.

Plus particulièrement, la courbe 202 est un chronogramme illustrant l'évolution d'une tension VDD prise entre les noeuds GND101 et VDD101. La courbe 201 est un chronogramme illustrant l'évolution d'une surintensité apparaissant à l'entrée de la batterie BAT101, c'est-à-dire au niveau du noeud VDD101, via l'inductance L101.

Le fonctionnement du circuit 100 est le suivant.

Dans un mode de fonctionnement normal, l'alimentation 101 fournit une tension d'alimentation et un courant d'alimentation à la charge, c'est-à-dire ici la batterie BAT101. Pour cela, l'interrupteur M101 est conducteur, et les diodes D101 et D102 sont adaptées à bloquer un courant provenant du noeud VDD101. La diode TVS TVS101 et le thyristor T101 ne sont pas conducteurs.

Si, par erreur, la charge BAT101 est montée à l'envers, la tension de la charge BAT101 est bloquée par la diode TVS TVS101 dont la tension d'avalanche est supérieure à la tension de la batterie BAT101. Le thyristor T101 est toujours bloqué, car aucun courant n'est fourni à sa gâchette. La batterie BAT101 n'est donc pas déchargée par le circuit de protection contre les surtensions.

Lors de l'apparition d'un court-circuit ou d'une surintensité, qui est le cas illustré en figure 2, le courant augmente rapidement et l'interrupteur M101 détecte le court-circuit, ou la surintensité. L'interrupteur M101 devient non conducteur. Une surtension due à la coupure soudaine du courant au travers des câbles reliant la batterie, ces câbles présentant une inductance représentée par la bobine L101, apparaît au niveau du circuit de protection 100, et plus particulièrement au niveau de la diode TVS TVS101 et de la diode D101. Quand cette surtension est supérieure à la somme de la tension d'écrêtage de la diode TVS TVS101 et de la tension de polarisation directe de la diode D101, un courant traverse la diode D101. Quand la tension aux bornes de la diode D101 est assez forte, c'est-à-dire lorsque la tension aux bornes de la diode 101 est supérieure à la tension maximale applicable entre la gâchette et la cathode du thyristor T101 sans le déclencher, un courant circule dans la gâchette du thyristor T101 et arrive au niveau de la cathode du thyristor T101 et de l'anode de la diode D102. Le thyristor T101 est alors démarré et conduit la surtension qui est alors emmenée au noeud de référence GND101, et fonctionne comme une diode de roue libre. La charge n'est donc pas alimentée.

Un avantage du circuit 100 est qu'il permet un protection des circuits d'alimentation et des circuits alimentés par la batterie BAT101 contre d'éventuelles surtensions pouvant survenir suite à l'apparition d'une surintensité bloquée par l'interrupteur M101.

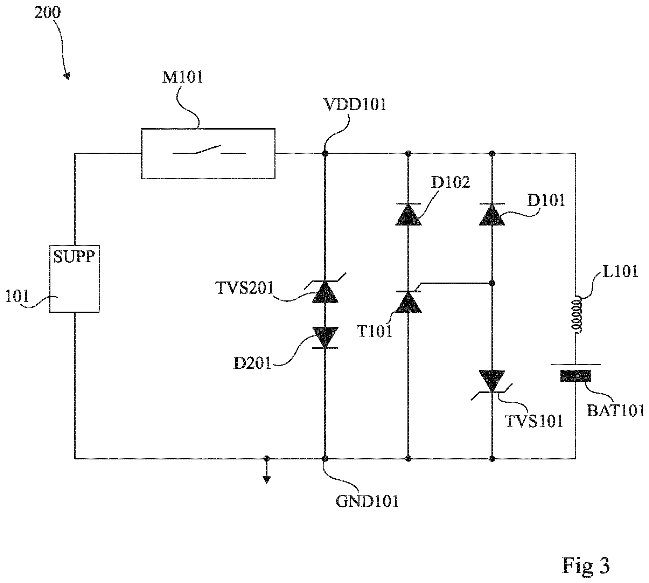

La figure 3 représente un mode de réalisation d'un circuit de protection 200 contre les surintensités et contre les surtensions.

Le circuit de protection 200 est similaire au circuit de protection 100 décrit en relation avec la figure 1. Les éléments communs aux circuits 100 et 200 ne sont pas décrits de nouveau en détail ici, et seules les différences entre les circuits 100 et 200 sont mises en exergue.

Ainsi, comme le circuit 100, le circuit 200 est adapté à être placé entre l'alimentation 101 (SUPP) et une charge. Comme en figure 1, en figure 2, la charge est la batterie BAT101 accompagnée d'une inductance parasite L101.

De même, comme le circuit 100, le circuit 200 comprend :
- l'interrupteur M101 ;
- la diode D101 et la diode TVS TVS101 ; et
- la diode D102 et le thyristor T101.

Le circuit comprend, en outre, une diode TVS TVS201 et une diode D201. Ces deux composants ont pour but d'éliminer des surtensions pouvant apparaître entre les noeuds VDD101 et GND101. Selon un exemple, la diode D201 est adaptée à avoir une tension de polarisation inverse supérieure à une tension limite Vlim définie par les circuits à protéger.

La cathode de la diode TVS TVS201 est reliée, de préférence connectée, au noeud VDD101, et l'anode de la diode TVS TVS201 est reliée, de préférence connectée, à l'anode de la diode D201. La cathode D201 de la diode D201 est reliée, de préférence connectée, au noeud GND101.

Selon un mode de réalisation, la diode TVS TVS201 est adaptée à amortir les surtensions positives survenant entre les noeuds VDD101 et GND101. Selon un mode de réalisation, la diode D201 est adaptée à bloquer les surtensions négatives survenant entre les noeuds VDD101 et GND101. Selon une variante, la diode TVS TVS201 peut être remplacée par plusieurs diode montées en série.

Un avantage du circuit 200 est qu'il permet une protection bidirectionnelle de la charge contre les surtensions provoquées par une protection contre les surintensités.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Circuit (100) de protection contre les surtensions apparaissant lors d'une protection contre les surintensités comprenant :
- une première diode (D101) et une deuxième diode (D102) dont les cathodes sont reliées à un premier noeud (VDD101) ;
- une première diode de suppression de tensions transitoires (TVS101) dont la cathode est reliée à un deuxième noeud (GND101) et dont l'anode est reliée à l'anode de ladite première diode (D101) ;
- un thyristor (T101) dont la cathode est reliée à l'anode de ladite deuxième diode (D102), dont l'anode est reliée audit deuxième noeud, et dont la gâchette est reliée à l'anode de la dite première diode (D101) ; et
- un interrupteur (M101) dont une première borne est reliée au premier noeud (VDD101).

2. Circuit selon la revendication 1, dans lequel la première diode (D101) est une diode à jonction PN.

3. Circuit selon la revendication 1 ou 2, dans lequel la deuxième diode (D102) est une diode de Schottky.

4. Circuit selon la revendication 1 ou 2, dans lequel la deuxième diode (D102) est une diode à jonction PN.

5. Circuit selon l'une quelconque des revendications 1 à 4, dans lequel les première et deuxième diodes (D101, D102) ont des tensions de polarisation inverse supérieures à une tension d'alimentation maximale (Vmax).

6. Circuit selon la revendication 5, dans lequel la tension d'alimentation maximale (Vmax) est supérieure à 14 V.

7. Circuit selon l'une quelconque des revendications 1 à 6, dans lequel la tension d'alimentation est adaptée à être appliquée entre une deuxième borne de l'interrupteur (M101), différente de la première borne, et ledit deuxième noeud (GND101).

8. Circuit selon l'une quelconque des revendications 5 à 7, dans lequel ladite première diode à suppression de tensions transitoires (TVS101) a une tension d'avalanche supérieure à une tension délivrée par une charge (BAT101).

9. Circuit selon l'une quelconque des revendications 1 à 8, comprenant, en outre, au moins une deuxième diode de suppression de tensions transitoires disposée en série entre la cathode de ladite première diode à suppression de tensions transitoires (TVS101) et ledit deuxième noeud.

10. Circuit selon l'une quelconque des revendications 1 à 9, dans lequel l'interrupteur (M101) est un ou plusieurs transistors de type NMOS.

11. Circuit selon l'une quelconque des revendications 1 à 9, dans lequel l'interrupteur (M101) est un ou plusieurs transistor de type PMOS.

12. Circuit selon l'une quelconque des revendications 1 à 11, dans lequel une charge est adaptée à être connectée entre les premier et deuxième noeuds (VDD101, GND101).

13. Circuit selon la revendication 12, dans lequel ladite charge est une batterie (BAT101).

14. Circuit selon l'une quelconque des revendications 1 à 13, comprenant, en outre :
- une troisième diode à suppression de tensions transitoires (TVS201) dont la cathode est reliée au premier noeud (VDD101) ; et
- une troisième diode (D201) dont l'anode est reliée à l'anode de ladite troisième diode à suppression de tensions transitoires (TVS201), et dont la cathode est reliée au deuxième noeud (GND101).

15. Dispositif de conversion de tension comprenant le circuit selon l'une quelconque des revendications 1 à 14.

16. Véhicule comprenant un circuit selon l'une quelconque des revendications 1 à 14.
